# EUROPEAN PATENT APPLICATION

(11) **EP 4 404 362 A1**
(43) Date of publication of application: **24.07.2024**
(21) Application number: 23843331.2
(22) Date of filing: 18.07.2023
(51) Int. Cl.: H01M 50/342, H01M 50/184, H01M 50/367, H01M 50/124, H01M 50/119, H01M 50/121, H01M 50/133, B29C 65/00

(54) **POUCH-TYPE BATTERY CELL AND POUCH-TYPE BATTERY CASE SEALING DEVICE FOR MANUFACTURING SAME**

(30) Priority: 18.07.2022 KR 20220088274
(71) Applicant: LG Energy Solution, Ltd., Seoul 07335 (KR)
(72) Inventor: SEO, Tai Joon, Daejeon 34122 (KR); PARK, Lae Seo, Daejeon 34122 (KR)
(74) Representative: Goddar, Heinz J.
(86) International application number: PCT/KR2023/010311
(87) International publication number: WO 2024/019485

(57) **Abstract**

The present invention relates to a pouch-shaped battery cell including a pouch-shaped battery case including a laminated sheet including an inner resin layer and a metal layer and an electrode assembly accommodated in the pouch-shaped battery case, wherein a sealed portion is formed at an outer periphery of an electrode assembly receiving portion and sealed by a thermal fusion, the sealed portion is formed such that pressed portions and non-pressed portions are alternately disposed in a direction from the inside of the pouch-shaped battery case to the outside of the pouch-shaped battery case, and a thickness of the inner resin layer of each of the pressed portions decreases along the direction toward the outside of the pouch-shaped battery case, whereby the sealed portion of the pouch-shaped battery case may be sequentially vented due to the difference in sealing force of the sealed portion.

## Description

### [Technical Field]

This application claims the benefit of priority to Korean Patent Application No. 10-2022-0088274 filed on July 18, 2022 and Korean Patent Application No. 10-2023-0093018 filed on July 18, 2023, the disclosures of which are incorporated herein by reference in their entireties.

The present invention relates to a pouch-shaped battery cell and an apparatus for sealing a pouch-shaped battery case used to manufacture the same. More particularly, the present invention relates to a pouch-shaped battery cell capable of rapidly discharging gas when the internal pressure of the pouch-shaped battery cell increases, whereby explosion of the pouch-shaped battery cell is prevented, and an apparatus for sealing a pouch-shaped battery case used to manufacture the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

The lithium secondary battery may be classified as a prismatic battery cell including a metal can-shaped case, a cylindrical battery cell including a metal can-shaped case, or a pouch-shaped battery cell including a case formed of a laminate sheet. Thereamong, the pouch-shaped battery cell is mostly used due to easy deformation and an increase in energy density when stored and stacked.

In the lithium secondary battery, a side reaction occurs between the surface of an electrode and an electrolytic solution during repeated charging and discharging, and if gas generated at this time is not discharged from the battery case, the battery case may swell, whereby the battery case may be deformed.

In particular, since the pouch-shaped battery cell includes no separate venting structure, unlike the cylindrical battery cell, which includes a safety vent, venting may occur at a part of a thermally fused outer periphery at which gas is concentrated or adhesion due to thermal fusion is low.

In general, the pouch-shaped battery cell is manufactured by shaping a laminated sheet including an outer coating layer, a metal layer, and an inner resin layer into a pouch-shaped battery case, receiving an electrode assembly in the pouch-shaped battery case, and sealing the pouch-shaped battery case.

The laminate sheet may have a more complex and varied layered structure depending on implementation of the laminate sheet and the environment to which the laminate sheet is applied.

In order to seal the pouch-shaped battery case, an outer periphery of the pouch-shaped battery case is pressed using a heating block configured to provide heat and pressure. As a result, the inner resin layer is melted, whereby inner resin layers of an upper case and a lower case, which are stacked on top of each other, are thermally fused to form a seal.

Conventionally, the heating block presses the entirety of the outer periphery of the pouch-shaped battery case with uniform force, whereby adhesion of the entirety of a sealed portion is uniform.

In this case, the pouch-shaped battery case is difficult to vent even though the internal pressure of the pouch-shaped battery cell increases, whereby the pressure in the pouch-shaped battery case gradually increases.

If external impact is applied to the pouch-shaped battery case while the pouch-shaped battery case continuously swells or if thermal runaway occurs as the result of a chemical chain reaction due to electrical short circuit, the pouch-shaped battery cell may explode.

Therefore, there is a need to develop a pouch-shaped battery cell configured such that the sealing pressure of a sealed portion formed at an outer periphery of a pouch-shaped battery case is nonuniform, whereby venting easily occurs or sequential venting occurs, and therefore explosion of the pouch-shaped battery cell is prevented and external materials are prevented from being introduced into the pouch-shaped battery cell in the process, and an apparatus for sealing a pouch-shaped battery case used to manufacture the same.

### [Disclosure]

### [Technical Problem]

The present invention has been made in view of the above problems, and it is an object of the present invention to provide a pouch-shaped battery cell configured such that a sealed portion of the pouch-shaped battery cell is formed so as to have different adhesive forces, whereby penetration of moisture, etc. into the pouch-shaped battery cell is prevented while venting is sequentially performed, and an apparatus for sealing a pouch-shaped battery case used to manufacture the same.

### [Technical Solution]

A pouch-shaped battery cell according to the present invention to accomplish the above object includes a pouch-shaped battery case including a laminated sheet including a resin layer and a metal layer and an electrode assembly accommodated in the pouch-shaped battery case, wherein a sealed portion is formed at an outer periphery of an electrode assembly receiving portion and the sealed portion is sealed by a thermal fusion, the sealed portion is formed such that pressed portions and non-pressed portions are alternately disposed in a direction from the inside of the pouch-shaped battery case to the outside of the pouch-shaped battery case, and the sealing force of each of the pressed portions increases along the direction toward the outside of the pouch-shaped battery case.

When the internal pressure of the pouch-shaped battery case increases, adhesive states of the pressed portions may be sequentially released in the direction from the inside to the outside of the pouch-shaped battery case.

The pouch-shaped battery case may include an inner resin layer, a metal layer, and an outer coating layer, and a thickness of the metal layer in each of the pressed portions may be less than the thickness of the metal layer in each of the non-pressed portions.

The thickness of the metal layer in each of the pressed portions of the sealed portion may decrease along the direction toward the outside of the pouch-shaped battery case.

The present invention provides an apparatus for sealing a pouch-shaped battery case used to manufacture the pouch-shaped battery cell, the apparatus including a lower sealing member located under the pouch-shaped battery case and an upper sealing member located above the pouch-shaped battery case, wherein the upper sealing member includes a plurality of sealing tools spaced apart from each other, wherein each of the plurality of sealing tools is configured to have a pressing force being different from each other.

The pressing force of each of the plurality of sealing tools may be configured to increase along the direction toward the outside of the pouch-shaped battery case.

Each of the plurality of sealing tools may be configured to have a temperature being different from each other.

The temperature of each of the plurality of sealing tools may be configured to increase along the direction toward the outside of the pouch-shaped battery case.

The plurality of sealing tools may have a same length being the same.

An upper surface of the lower sealing member may be flat and may be disposed to face the pouch-shaped battery case.

The lower sealing member may be configured to be heated.

The plurality of sealing tools may be configured to sequentially pressing along a direction from a sealing tool disposed at the inside of the pouch-shaped battery case to a sealing tool disposed at the outside of the pouch-shaped battery case.

Each of the plurality of sealing tools may be divided into two or more regions in an overall length direction, and each of the two or more regions may be configured to separately adjust at least one of the pressing temperature and the pressing pressure.

A pressing surface of each of the plurality of sealing tools may be inclined.

In addition, the present invention may provide various combinations of the above solving means.

### [Advantageous Effects]

As is apparent from the above description, in the present invention, venting of a sealed portion of a pouch-shaped battery cell is sequentially performed in a direction from the inside to the outside of a pouch-shaped battery case, whereby it is possible to accommodate an increase in volume of the pouch-shaped battery case and to prevent external materials from being introduced into the pouch-shaped battery case.

In addition, the pressing temperature and pressing force of a plurality of sealing tools constituting an upper sealing member are designed to be increased from the inside to the outside of the pouch-shaped battery case, whereby it is possible to reduce the size of a polyball formed at the inside of the pouch-shaped battery case as the result of melting of an inner resin layer of the pouch-shaped battery case, and therefore the pouch-shaped battery case may be vented even at a low internal pressure.

### [Description of Drawings]

FIG. 1 is a vertical sectional view showing the state in which an apparatus for sealing a pouch-shaped battery case according to a first embodiment is disposed at a part of a pouch-shaped battery case to be sealed.
FIG. 2 is a perspective view and a partial enlarged view of FIG. 1.
FIG. 3 is a perspective view of an apparatus for sealing a pouch-shaped battery case according to a second embodiment.
FIG. 4 is a perspective view and a partial enlarged view of a pouch-shaped battery cell sealed using the apparatus for sealing the pouch-shaped battery case of FIG. 3.
FIG. 5 is a vertical sectional view showing the state in which an apparatus for sealing a pouch-shaped battery case according to a third embodiment is disposed at a part of a pouch-shaped battery case to be sealed.
FIG. 6 is a vertical sectional view of a sealed portion of a pouch-shaped battery cell sealed using the apparatus for sealing the pouch-shaped battery case of FIG. 5.
FIG. 7 is a perspective view of an apparatus for sealing a pouch-shaped battery case according to a fourth embodiment.
FIG. 8 shows polyballs in pouch-shaped battery cells according to Example and Comparative Example.
FIG. 9 is a graph showing the results of measuring the adhesive strength of Sample 1.
FIG. 10 is a graph showing the results of measuring the adhesive strength of Sample 3.
FIG. 11 is a graph showing sealing strength based on temperature.
FIG. 12 is a graph showing a change in adhesive strength of Sample 1 to Sample 3.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

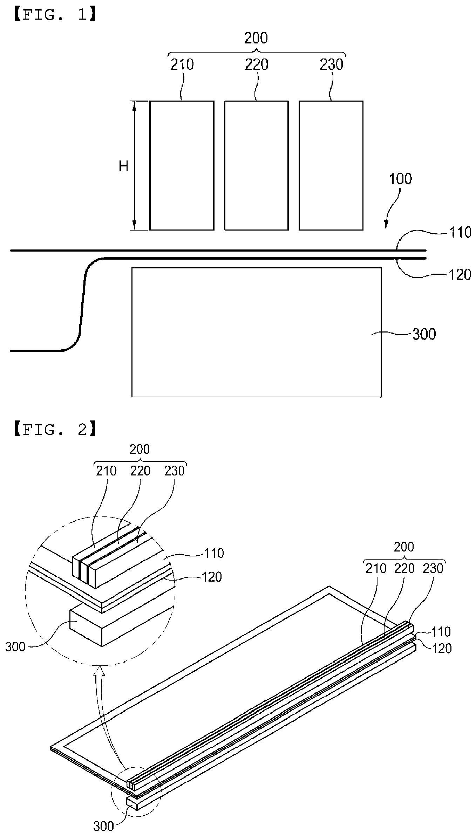

FIG. 1 is a vertical sectional view showing the state in which an apparatus for sealing a pouch-shaped battery case according to a first embodiment is disposed at a part of a pouch-shaped battery case to be sealed, and FIG. 2 is a perspective view and a partial enlarged view of FIG. 1.

Referring to FIGs. 1 and 2, the apparatus for sealing the pouch-shaped battery case according to the present invention includes a lower sealing member 300 located under a pouch-shaped battery case 110 and 120 and an upper sealing member 200 located above the pouch-shaped battery case 110 and 120, wherein the upper sealing member 200 includes a plurality of sealing tools having different pressing forces when sealing is performed, and the plurality of sealing tools is disposed spaced apart from each other.

The plurality of sealing tools shown in FIGs. 1 and 2 is constituted by a first sealing tool 210, a second sealing tool 220, and a third sealing tool 230, wherein the three sealing tools are separate members, which may press the pouch-shaped battery case in a state of being disposed spaced apart from each other at regular intervals.

The plurality of sealing tools may be set such that pressing force is gradually increased in the order of the first sealing tool 210, the second sealing tool 220, and the third sealing tool 230, and the distance between the upper sealing member 200 and the lower sealing member 300 is gradually decreased toward the outside of the pouch-shaped battery case.

As a result, the pouch-shaped battery case 110 and 120 may be pressed with force gradually increased toward the outside thereof, whereby the thickness of the pouch-shaped battery case may be gradually decreased.

For example, the range of the pressing force of the plurality of sealing tools may be set to a range within which the pouch-shaped battery case is not damaged, and may be specifically 100 kgf or less, more specifically 20 kgf to 80 kgf. Within the above range, the pressing force deviation between the first sealing tool 210 and the second sealing tool 220, and the pressing force deviation between the second sealing tool 220 and the third sealing tool 230 may be set so as to be equal to each other or to be different from each other.

Meanwhile, the plurality of sealing tools may be set so as to have different temperatures.

Specifically, the temperatures of the first sealing tool 210, the second sealing tool 220, and the third sealing tool 230 may be set so as to be increased in that order. For example, the temperature range of the sealing tools may be set to a range within which an inner resin layer of the pouch-shaped battery case can be melted, and may be specifically 130°C to 200°C, more specifically 140°C to 180°C, which is a range within which polypropylene, which is widely used as a material for the inner resin layer of the pouch-shaped battery case, can be melted. Within the above range, the temperature deviation between the first sealing tool 210 and the second sealing tool 220 and the temperature deviation between the second sealing tool 220 and the third sealing tool 230 may be set so as to be equal to each other or to be different from each other.

That is, since the temperatures of the sealing tools are gradually increased toward the outside of the pouch-shaped battery case 110 and 120, the degree of melting of the inner resin layer of the pouch-shaped battery case may be increased, whereby the adhesion between the pouch-shaped battery cases 110 and 120 may be gradually increased toward the outside thereof.

As described above, the pressures and the temperatures of the plurality of sealing tools of the upper sealing member 200 according to the present invention may be individually set, and the lengths H of the first sealing tool 210, the second sealing tool 220, and the third sealing tool 230 may be equal to each other.

That is, since the pressures and the temperatures of the first sealing tool 210, the second sealing tool 220, and the third sealing tool 230 may be individually set so as to be different from each other even though the lengths H thereof are equal to each other, it is possible to form a sealed portion having sealing forces different depending on the position when the pouch-shaped battery case is sealed.

An upper surface of the lower sealing member 300, which faces the pouch-shaped battery case 110 and 120, may be flat. When the plurality of sealing tools are set so as to have different pressures and temperatures pressing the pouch-shaped battery case, therefore, the lower sealing member 300 may support the entirety of the sealed portion of the pouch-shaped battery case.

In addition, the lower sealing member 300 may be configured in a heatable form to heat a lower surface of the pouch-shaped battery case 110 and 120 such that the inner resin layer can be sufficiently melted.

Specifically, the temperature of the lower sealing member may be set within the temperature range of the upper sealing member 200, and may be set to, for example, a temperature equal to the temperature of the first sealing tool of the upper sealing member 200, which has the lowest temperature.

The plurality of sealing tools may sequentially perform pressing in a direction from the first sealing tool 210, which is disposed at the inside of the pouch-shaped battery case, to the third sealing tool 230, which is disposed at the outside of the pouch-shaped battery case.

When a part of the pouch-shaped battery case to be sealed is pressed and heated, the inner resin layer at the part to be sealed is melted and moved toward inner and outer ends of the part to be sealed, which are opposite ends of the part to be sealed. When solidified in this state, the molten inner resin layer becomes a round ball-shaped lump. In the specification of the present application, the lump is called a polyball.

The larger the size of the polyball, the more difficult it is to vent the battery case.

In the present invention, therefore, the first sealing tool 210, the second sealing tool 220, and the third sealing tool 230 may perform pressing in that order to move the molten inner resin layer to the outside of the pouch-shaped battery case, whereby it is possible to reduce the size of the polyball formed at the inside of the sealed portion of the pouch-shaped battery case. Consequently, it is possible to reduce the pressure required to vent the pouch-shaped battery case.

Although FIG. 2 shows the form in which only an outer periphery of one side of the pouch-shaped battery case is pressed using the apparatus for sealing the pouch-shaped battery case according to the first embodiment, it is obvious that a sealed portion may be formed at any of four outer peripheries of the pouch-shaped battery case using the apparatus for sealing the pouch-shaped battery case according to the first embodiment. This is equally applied to an apparatus for sealing a pouch-shaped battery case according to each of third and fourth embodiments, which is configured to have a straight structure.

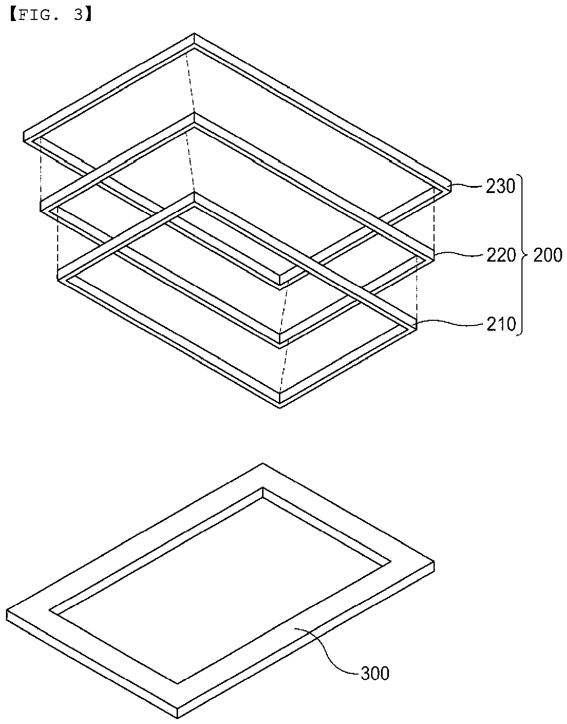

FIG. 3 is a perspective view of an apparatus for sealing a pouch-shaped battery case according to a second embodiment.

Referring to FIG. 3, the apparatus for sealing the pouch-shaped battery case according to the second embodiment includes an upper sealing member 200, which includes a first sealing tool 210, a second sealing tool 220, and a third sealing tool 230, and a lower sealing member 300.

Each of the first sealing tool 210, the second sealing tool 220, and the third sealing tool 230 is configured in the form of a square ring. When the first sealing tool, the second sealing tool, and the third sealing tool are disposed so as to overlap each other, a gap is formed between the first sealing tool 210 and the second sealing tool 220, and a gap is formed between the second sealing tool 220 and the third sealing tool 230.

That is, a pouch-shaped battery case is not directly pressed by the gap.

The first sealing tool 210, the second sealing tool 220, and the third sealing tool 230 may sequentially perform pressing in a direction from the first sealing tool 210, which is disposed at the inside of the pouch-shaped battery case, to the third sealing tool 230, which is disposed at the outside of the pouch-shaped battery case, to move a molten inner resin layer to the outside of the pouch-shaped battery case, whereby it is possible to reduce the size of a polyball formed at the inside of a sealed portion of the pouch-shaped battery case. Consequently, it is possible to reduce the pressure required to vent the pouch-shaped battery case.

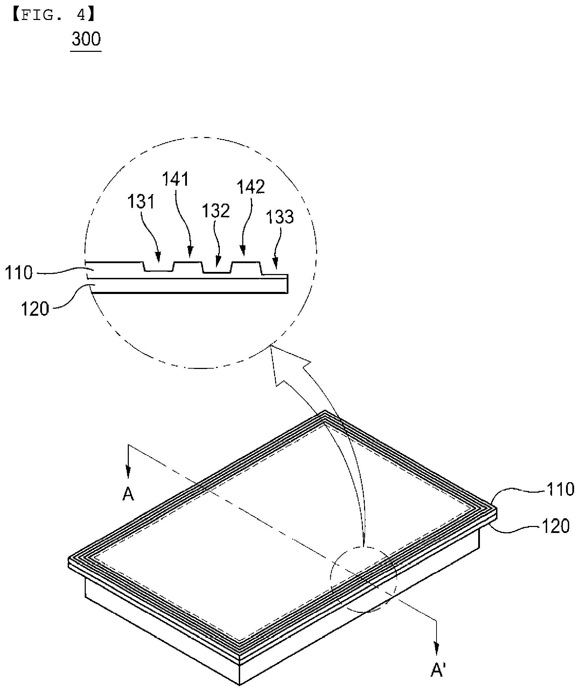

FIG. 4 is a perspective view and a partial enlarged view of a pouch-shaped battery cell sealed using the apparatus for sealing the pouch-shaped battery case of FIG. 3.

Referring to FIG. 4, the pouch-shaped battery cell according to the present invention includes a pouch-shaped battery case 110 and 120, which is made of a laminate sheet including a resin layer and a metal layer, and an electrode assembly received in the pouch-shaped battery case 110 and 120, wherein a sealed portion is formed at an outer periphery of an electrode assembly receiving portion by thermal fusion, the sealed portion is formed such that pressed portions and non-pressed portions are alternately disposed in a direction from the inside to the outside of the pouch-shaped battery case, and the sealing force of each of the pressed portions is gradually increased in the direction toward the outside of the pouch-shaped battery case.

The pouch-shaped battery case includes an outer coating layer that is highly resistant to an external environment, a metal layer configured to prevent introduction of foreign matter, such as gas or moisture, or leakage of an electrolytic solution, and an inner resin layer that is thermally fusible.

The outer coating layer may include polyethylene terephthalate or stretched nylon; aluminum or an aluminum alloy may be used as the metal layer; and the inner resin layer may include polypropylene.

The pressed portions include a first pressed portion 131, a second pressed portion 132, and a third pressed portion 133, and the non-pressed portions include a first non-pressed portion 141 and a second non-pressed portion 142.

The first pressed portion 131, the second pressed portion 132, and the third pressed portion 133 are parts pressed respectively by the first sealing tool 210, the second sealing tool 220, and the third sealing tool 230 of the upper sealing member 200 of FIG. 3.

When the pressing forces and pressing temperatures of the first sealing tool 210, the second sealing tool 220, and the third sealing tool 230 are set so as to be gradually increased toward the outside of the pouch-shaped battery case, the adhesion of the third pressed portion 133 is the highest among the first pressed portion 131, the second pressed portion 132, and the third pressed portion 133.

When the internal pressure of the pouch-shaped battery case 110 and 120 increases, therefore, the adhesive states of the plurality of pressed portions are sequentially released in the direction from the inside of the pouch-shaped battery case 110 and 120, at which adhesion is low, to the outside of the pouch-shaped battery case 110 and 120, at which adhesion is high.

Specifically, when the adhesive state of the first pressed portion 131 is released, the internal space of the pouch-shaped battery case may extend to the first non-pressed portion 141, whereby it is possible to buffer an increase in internal pressure. Subsequently, when the adhesive state of the second pressed portion 132 is released, the internal space of the pouch-shaped battery case may extend to the second non-pressed portion 142, whereby it is possible to buffer an increase in internal pressure. Consequently, it is possible to prevent the pouch-shaped battery case from instantaneously exploding due to an increase in internal pressure. At this time, the pressed state of the third pressed portion 133 is maintained, and therefore it is possible to prevent the introduction of external materials, such as moisture, into the pouch-shaped battery cell.

In addition, the thickness of the second pressed portion 132 is formed so as to be less than the thickness of the first pressed portion 131, and the thickness of the third pressed portion 133 is formed so as to be less than the thickness of the second pressed portion 132.

At this time, the thicknesses of the first pressed portion 131, the second pressed portion 132, and the third pressed portion 133 may be reduced due to a decrease in thickness of each of the inner resin layer, the metal layer, and the outer coating layer, specifically due to a decrease in thickness of the metal layer.

That is, the thickness of the metal layer in the first pressed portion 131, the second pressed portion 132, and the third pressed portion 133 of the sealed portion of the pouch-shaped battery case may be gradually decreased in a direction toward the outside of the pouch-shaped battery case.

As a result, the thickness of the metal layer in the third pressed portion 133 may be reduced to the extent to which rigidity cannot be expected. When the second pressed portion 132 is vented, therefore, the adhesive state of the third pressed portion 133 may not be maintained, whereby the third pressed portion 133 may be torn under venting pressure, and therefore the pouch-shaped battery case may be completely opened.

Meanwhile, since the first non-pressed portion 141 and the second non-pressed portion 142 are parts that are not pressed by the upper sealing member, the original thickness of the pouch-shaped battery case may be maintained. Therefore, the thickness of the metal layer in the first pressed portion 131, the second pressed portion 132, and the third pressed portion 133 is formed so as to be less than the thickness of the metal layer in the first non-pressed portion 141 and the second non-pressed portion 142.

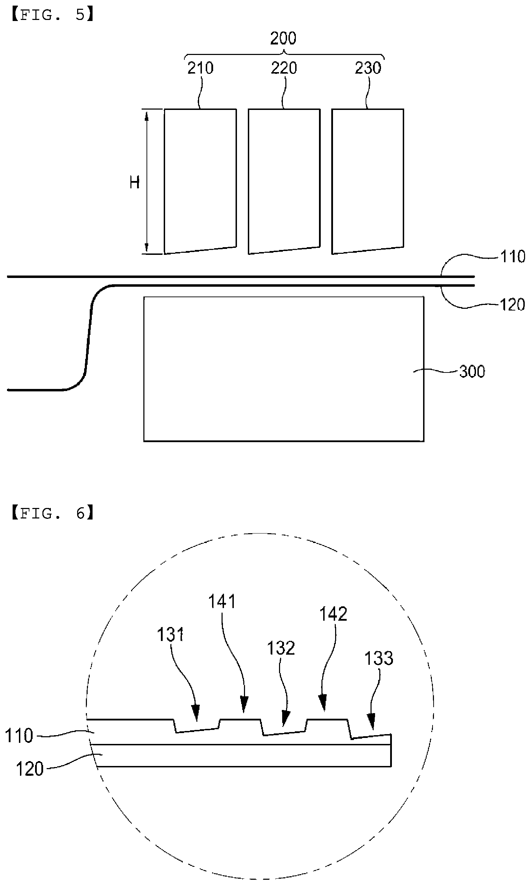

FIG. 5 is a vertical sectional view showing the state in which an apparatus for sealing a pouch-shaped battery case according to a third embodiment is disposed at a part of a pouch-shaped battery case to be sealed.

Referring to FIG. 5, the apparatus for sealing the pouch-shaped battery case according to the third embodiment is configured such that a pressing surface of each of a first sealing tool 210, a second sealing tool 220, and a third sealing tool 230 is inclined. In FIG. 5, the inclination of the pressing surface is exaggerated for the convenience of explanation, and the difference between the largest length H and the smallest length of each sealing tool is less than the sum of the thicknesses of the pouch-shaped battery cases 110 and 120.

The left side of each of the first sealing tool 210, the second sealing tool 220, and the third sealing tool 230, the length H of which is large, presses the pouch-shaped battery case 110 and 120 more strongly than the right side of each of the first sealing tool, the second sealing tool, and the third sealing tool, the length H of which is small, whereby the sealed portion of the pouch-shaped battery case 110 and 120 pressed by the left side of each of the first sealing tool 210, the second sealing tool 220, and the third sealing tool 230 may have higher sealing force than the sealed portion of the pouch-shaped battery case 110 and 120 pressed by the right side of each of the first sealing tool, the second sealing tool, and the third sealing tool.

FIG. 6 is a vertical sectional view of a sealed portion of a pouch-shaped battery cell sealed using the apparatus for sealing the pouch-shaped battery case of FIG. 5.

Referring to FIG. 6, a pressed portion includes a first pressed portion 131, a second pressed portion 132, and a third pressed portion 133, and a non-pressed portion includes a first non-pressed portion 141 and a second non-pressed portion 142.

The first pressed portion 131, the second pressed portion 132, and the third pressed portion 133 are parts pressed respectively by the first sealing tool 210, the second sealing tool 220, and the third sealing tool 230 of the upper sealing member 200 of FIG. 5.

When the pressing forces and pressing temperatures of the first sealing tool 210, the second sealing tool 220, and the third sealing tool 230 are set so as to be gradually increased toward the outside of a pouch-shaped battery case, the adhesion of the third pressed portion 133 is the highest among the first pressed portion 131, the second pressed portion 132, and the third pressed portion 133.

When the internal pressure of the pouch-shaped battery case 110 and 120 increases, therefore, the adhesive states of the plurality of pressed portions are sequentially released in the direction from the inside to the outside of the pouch-shaped battery case 110 and 120.

The first pressed portion 131, the second pressed portion 132, and the third pressed portion 133 are pressed by the upper sealing member, the pressing surface of which is inclined, shown in FIG. 5, and therefore the thickness of each of the first pressed portion 131, the second pressed portion 132, and the third pressed portion 133 is gradually increased from the inside to the outside of the pouch-shaped battery case.

Consequently, a molten inner resin layer may move from the first pressed portion 131 to the first non-pressed portion 141, and may move from the second pressed portion 132 to the second non-pressed portion 142, whereby it is possible to reduce the size of a polyball formed at the inside of the first pressed portion 131.

In connection with the difference in thickness of the metal layer of the pouch-shaped battery case, the description of the pouch-shaped battery cell shown in FIG. 4 may be equally applied to the description of the sealed portion of the pouch-shaped battery cell shown in FIG. 6.

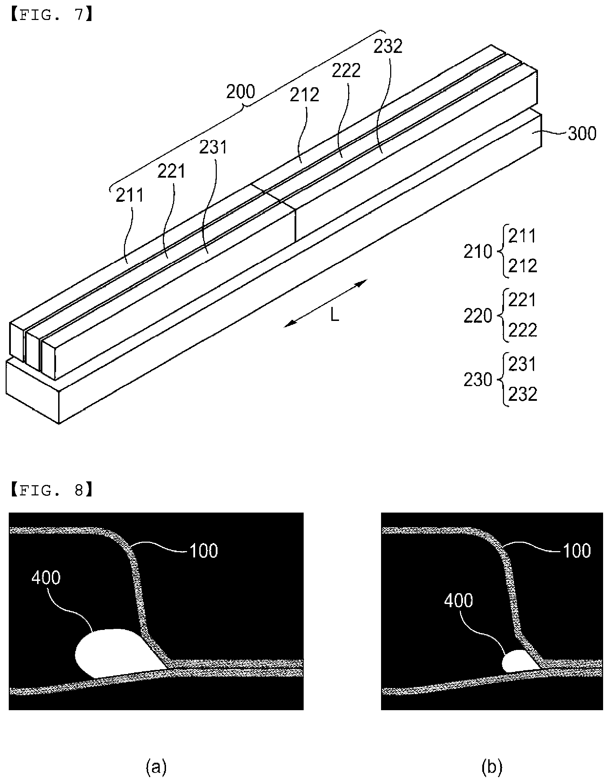

FIG. 7 is a perspective view of an apparatus for sealing a pouch-shaped battery case according to a fourth embodiment.

Referring to FIG. 7, each of a plurality of sealing tools including an upper sealing member 200 may be divided into two or more regions in an overall length direction L, and at least one of pressing temperature and pressing pressure of each region may be separately adjusted, when compared to the apparatus for sealing the pouch-shaped battery case shown in FIG. 2.

In FIG. 7, the upper sealing member 200 is configured such that a first sealing tool 210 is divided into a first region 211 and a second region 212, a second sealing tool 220 is divided into a first region 221 and a second region 222, and a third sealing tool 230 is divided into a first region 231 and a second region 232.

In external appearance, the first regions 211, 221, and 231 may be integrally formed with the second regions 212, 222, and 232, respectively, or may be physically separated from the second regions 212, 222, and 232, respectively.

The first sealing tool 210, the second sealing tool 220, and the third sealing tool 230 may sequentially seal the pouch-shaped battery case, or any of the first regions 211, 221, and 231 and the second regions 212, 222, and 232 may seal the pouch-shaped battery case first.

Hereinafter, the present invention will be described with reference to examples. The examples are provided only for easier understanding of the present invention and should not be construed as limiting the scope of the present invention.

### <Example 1>

A pouch-shaped battery case including an outer coating layer, a metal layer, and an inner resin layer was prepared, and an outer periphery of one side of the pouch-shaped battery case was pressed and heated using the apparatus for sealing the pouch-shaped battery case shown in FIGs. 1 and 2.

At this time, the pressing forces and pressing temperatures of the first sealing tool, the second sealing tool, and the third sealing tool were set as shown in Table 1 below, and the temperature of the lower sealing member was set to 140°C, and the first sealing tool, the second sealing tool, and the third sealing tool performed pressing in that order.

**[Table 1]**

| | Pressing force (kgf) | Pressing temperature (°C) |
|---|---|---|
| First sealing tool | 20 | 140 |
| Second sealing tool | 30 | 160 |
| Third sealing tool | 80 | 180 |

### <Comparative Example>

A pouch-shaped battery case identical to Example was prepared, the pressing force and the pressing temperature of each of an upper sealing member having a flat pressing surface and a lower sealing member were set to 40 kgf and 180°C, respectively, and an outer periphery of one side of the pouch-shaped battery case was pressed and heated.

FIG. 8 shows polyballs in pouch-shaped battery cells according to Example and Comparative Example.

Referring to FIG. 8, (a) shows the result of Comparative Example and (b) is the result of Example. It can be seen that the size of the polyball 400 is significantly reduced when the apparatus for sealing the pouch-shaped battery case, as in Example, is used. As a result, the pouch-shaped battery case 100 may be easily vented at a lower pressure, and therefore it is possible to prevent explosion of the pouch-shaped battery cell.

### <Example 2>

An electrode assembly was received in a pouch-shaped battery case having a thickness of 71 um, and an outer periphery of the pouch-shaped battery case was sealed, whereby a pouch-shaped battery cell was manufactured.

At this time, the outer periphery of the pouch-shaped battery case was sealed under three sealing conditions: 40 kgf, 185°C, and pressing for 2 seconds; 40 kgf, 170°C, and pressing for 2 seconds; and 40 kgf, 150°C, and pressing for 2 seconds to manufacture five pouch-shaped battery cells each having a thickness of a sealed portion of 127 µm, five pouch-shaped battery cells each having a thickness of a sealed portion of 132 um, and five pouch-shaped battery cells each having a thickness of a sealed portion of 137 µm. The pouch-shaped battery cells each having a thickness of a sealed portion of 127 µm are grouped into Sample 1, the pouch-shaped battery cells each having a thickness of a sealed portion of 132 um are grouped into Sample 2, and the pouch-shaped battery cells each having a thickness of a sealed portion of 137 µm are grouped into Sample 3.

### <Analysis of thickness of inner resin layer of sealed portion and measurement of adhesive strength>

The sealed portions of the pouch-shaped battery cells of Sample 1 and Sample 3 were cut, and the thickness of the inner resin layer of each of the pouch-shaped battery cells was measured on the cut surfaces.

The average thickness of the inner resin layers of Sample 1 is 33.2 um, and the average thickness of the inner resin layers of Sample 3 is 42.31 µm.

The adhesive strengths of Sample 1 and Sample 3 were measured.

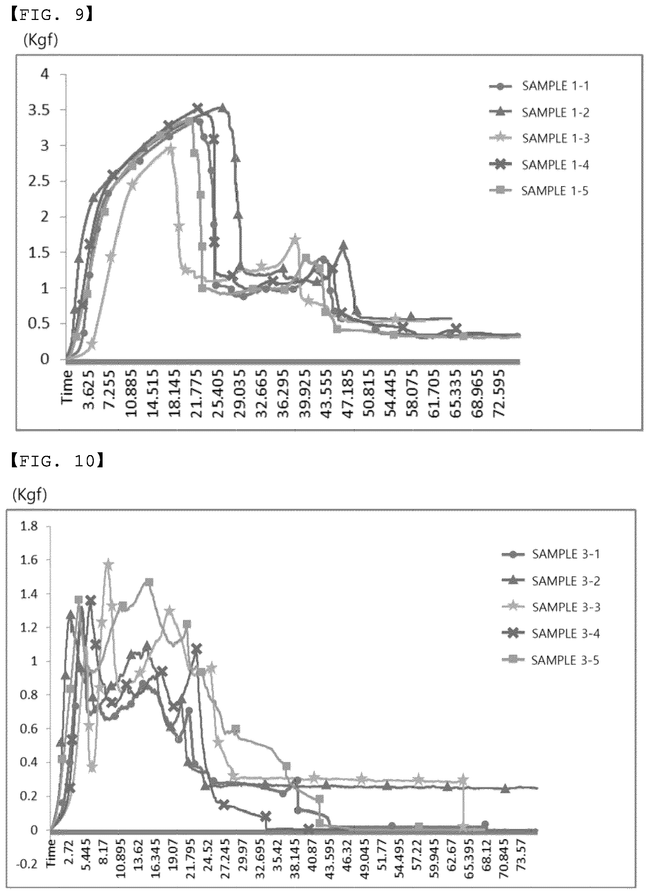

FIG. 9 is a graph showing the results of measuring the adhesive strengths of Sample 1, and FIG. 10 is a graph showing the results of measuring the adhesive strengths of Sample 3.

Referring to FIGs. 9 and 10, the average adhesive strength of Sample 1 is 3.34 kgf, and the average adhesive strength of Sample 3 is 1.35 kg.

Consequently, it can be seen that, when the sealed portion is configured so as to have different sealing forces, as in the present invention, Sample 1, in which the thickness of the inner resin layer is relatively small, corresponds to the case in which the outer sealed portion of the electrode assembly receiving portion is located in a direction toward the outside of the pouch-shaped battery case, and Sample 2, in which the thickness of the inner resin layer is relatively large, corresponds to the case in which the outer sealing portion of the electrode assembly receiving portion is located in a direction toward the outside of the pouch-type battery case.

That is, it can be expected that the thickness of the inner resin layer in the pressed portion is gradually decreased from the inside to the outside of the pouch-shaped battery case, whereby the adhesive strength is gradually increased.

### <Measurement of adhesive strength based on temperature>

A chamber configured to store Samples 1 to 3 was prepared, the temperature of the chamber was set to specific temperatures, and the samples were placed in the chamber. When the temperature of the chamber reached each of the specific temperatures, the adhesive strength was measured after waiting for 1 minute.

The specific temperatures were room temperature, 100°C, 110°C, 120°C, and 130°C.

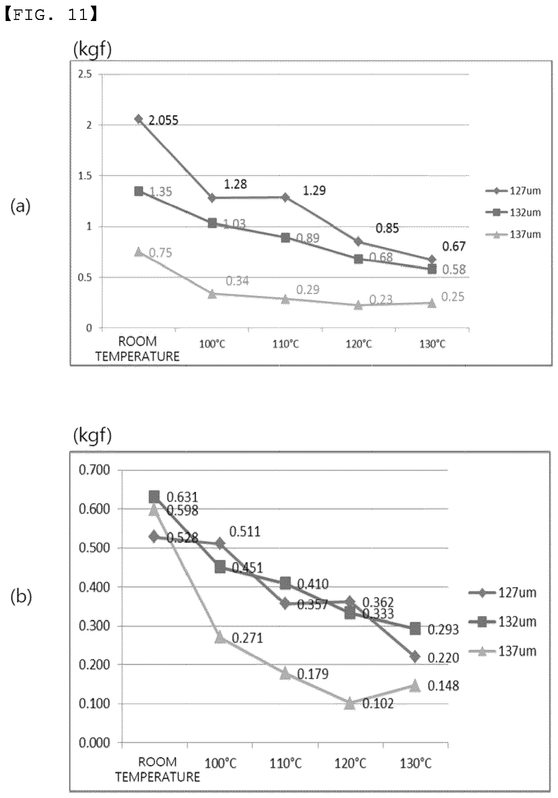

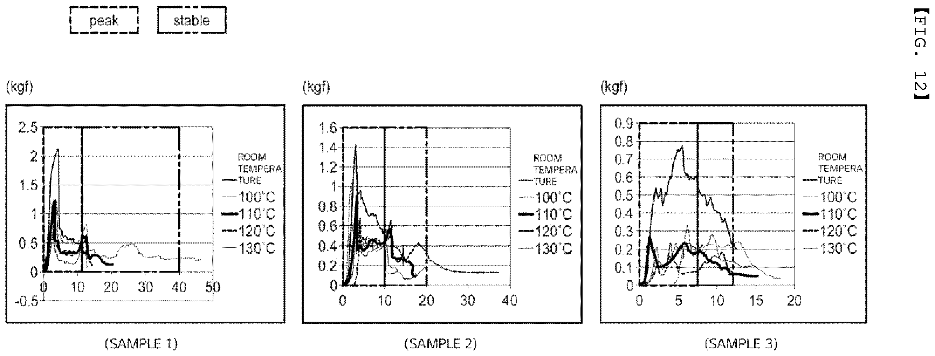

FIG. 11 is a graph showing adhesive strength based on temperature, and FIG. 12 is a graph showing a change in adhesive strength of Sample 1 to Sample 3.

Referring to FIG. 11, (a) shows the highest value of adhesive strength by temperature during an adhesive strength measurement process, and (b) shows the average value of the section at which the adhesive strength was stably measured.

Referring to FIG. 12, the adhesive strength of the sealed portion was measured at room temperature, 100°C, 110°C, 120°C, and 130°C.

The adhesive strength measurement was performed using a method of measuring the adhesion strength over time while separating the adhered parts of the pouch-shaped battery case from the side at which the polyball was located. The section having the highest adhesive strength was measured at the part at which the polyball was formed, which is the beginning of the adhesive strength measurement.

Referring to (a) and (b) of FIG. 11, it can be seen that the larger the thickness of the inner resin layer, the lower the adhesive strength and that the higher the temperature of the chamber, the lower the adhesive strength. Referring to FIG. 12, it can be seen that the maximum adhesive force was measured at the part at which the polyball was formed, which is the beginning of the adhesive strength measurement, under all temperature conditions.

That is, the highest adhesive strength is measured in Sample 1, in which the thickness of the inner resin layer is small, and it can be seen that the adhesive strength increases with an increase in size of the polyball in consideration of the fact that the size of the polyball is large at the part at which the thickness of the inner resin layer is small.

Consequently, it can be seen that, when the plurality of sealing tools is set so as to have different pressing forces such that the thickness of the inner resin layer is formed so as to be gradually decreased toward the outside of the pouch-shaped battery case, the adhesive strength gradually increases toward the outside of the pouch.

In addition, when sealing is sequentially performed in a direction from the inside to the outside of the sealed portion of the pouch-shaped battery case, as in the present invention, the size of the polyball formed at the inside of the pouch-shaped battery case is reduced, whereby it is possible to provide a pouch-shaped battery cell with lower adhesive strength of a sealed portion.

Those skilled in the art to which the present invention pertains will appreciate that various applications and modifications are possible within the category of the present invention based on the above description.

### (Description of Reference Numerals)

100, 110, 120: Pouch-shaped battery cases
131: First pressed portion
132: Second pressed portion
133: Third pressed portion
141: First non-pressed portion
142: Second non-pressed portion
200: Upper sealing member
210: First sealing tool
220: Second sealing tool
230: Third sealing tool
300: Lower sealing member
400: Polyball

## Claims

1. A pouch-shaped battery cell comprising:
a pouch-shaped battery case including a laminated sheet comprising an inner resin layer, a metal layer, and an outer coating layer; and
an electrode assembly accommodated in the pouch-shaped battery case,
wherein a sealed portion is formed at an outer periphery of an electrode assembly receiving portion, wherein the sealed portion is sealed by a thermal fusion,
wherein the sealed portion is formed such that pressed portions and non-pressed portions are alternately disposed in a direction from an inside of the pouch-shaped battery case to an outside of the pouch-shaped battery case, and
wherein a thickness of the inner resin layer of each of the pressed portions decreases along the direction toward the outside of the pouch-shaped battery case.

2. The pouch-shaped battery cell according to claim 1, wherein, when an internal pressure of the pouch-shaped battery case increases, adhesive states of the pressed portions are sequentially released in the direction from the inside to the outside of the pouch-shaped battery case.

3. The pouch-shaped battery cell according to claim 1, wherein a thickness of the metal layer in each of the pressed portions is less than a thickness of the metal layer in each of the non-pressed portions.

4. The pouch-shaped battery cell according to claim 3, wherein the thickness of the metal layer in each of the pressed portions of the sealed portion decreases along the direction toward the outside of the pouch-shaped battery case.

5. The pouch-shaped battery cell according to claim 1, wherein a sealing force of each of the pressed portions increases along the direction toward the outside of the pouch-shaped battery case.

6. An apparatus for sealing a pouch-shaped battery case used to manufacture the pouch-shaped battery cell according to any one of claims 1 to 5, the apparatus comprising:
a lower sealing member located under the pouch-shaped battery case; and
an upper sealing member located above the pouch-shaped battery case,
wherein the upper sealing member comprises a plurality of sealing tools spaced apart from each other, wherein each of the plurality of sealing tools is configured to have a pressing force being difference from each other.

7. The apparatus according to claim 6, wherein the pressing force of each of the plurality of sealing tools is configured to increase along the direction toward an outside of the pouch-shaped battery case.

8. The apparatus according to claim 6, wherein each of the plurality of sealing tools is configured to have a temperature being different from each other.

9. The apparatus according to claim 6, wherein a temperature of each of the plurality of sealing tools is configured to increase along the direction toward an outside of the pouch-shaped battery case.

10. The apparatus according to claim 6, wherein the plurality of sealing tools has a length being the same.

11. The apparatus according to claim 6, wherein an upper surface of the lower sealing member is flat and is disposed to face the pouch-shaped battery case.

12. The apparatus according to claim 11, wherein the lower sealing member is configured to be heated.

13. The apparatus according to claim 6, wherein the plurality of sealing tools is configured to sequentially pressing along a direction from a sealing tool disposed at an inside of the pouch-shaped battery case to a sealing tool disposed at an outside of the pouch-shaped battery case.

14. The apparatus according to claim 6, wherein each of the plurality of sealing tools is divided into two or more regions in an overall length direction, and
wherein each of the two or more regions is configured to separately adjust at least one of a pressing temperature and a pressing pressure.

15. The apparatus according to claim 6, wherein a pressing surface of each of the plurality of sealing tools is inclined.
